# EUROPÄISCHE PATENTANMELDUNG

(11) **EP 2 042 360 A2**
(43) Veröffentlichungstag der Anmeldung: **01.04.2009**
(21) Anmeldenummer: 08015894.2
(22) Anmeldetag: 10.09.2008
(51) Int. Cl.: B60J 1/20

(54) **Flächengebilde für eine Schutzvorrichtung in einem Fahrzeuginnenraum**

(30) Priorität: 27.09.2007 DE 102007048008
(71) Anmelder: BOS GmbH & Co. KG, 73760 Ostfildern (DE)
(72) Erfinder: Bohlke, Hartmut, 42369 Wuppertal (DE); Göbbels, Andreas, 51515 Kürten (DE); Salewski, Jürgen, 40599 Düsseldorf (DE); Sitzler, Wolfgang, 42111 Wuppertal (DE)
(74) Vertreter: Patentanwälte Ruff, Wilhelm, Beier, Dauster & Partner

(57) **Zusammenfassung**

Ein derartiges Flächengebilde (1), das zumindest in einer Längserstreckungsrichtung weitgehend biegeschlaff gestaltet ist, mit einem formstabilen Auszugprofil (3), das an einem Stirnendbereich des Flächengebildes (1) angeordnet ist, wobei das Flächengebilde aus einer textilen Web- oder Maschenware hergestellt ist, ist bekannt.
Erfindungsgemäß ist das Flächengebilde (1) wenigstens abschnittsweise mit quer zu der Längserstreckungsrichtung erstreckten Versteifungssträngen (8) versehen, die in die Web- oder Maschenware eingearbeitet sind.
Einsatz für Innenräume von Personenkraftwagen.

## Beschreibung

Die Erfindung betrifft ein Flächengebilde für eine Schutzvorrichtung in einem Fahrzeuginnenraum, das zumindest in einer Längserstreckungsrichtung weitgehend biegeschlaff gestaltet ist, mit einem formstabilen Auszugprofil, das an einem Stirnendbereich des Flächengebildes angeordnet ist, wobei das Flächengebilde aus einer textilen Web- oder Maschenware hergestellt ist.

Das erfindungsgemäße Flächengebilde ist Teil von Sonnenschutzvorrichtungen, von Laderaumabdeckungen oder von Trennvorrichtungen, die zur etwa vertikalen Abtrennung eines Laderaumes von einem Fahrgastraum vorgesehen sind. Beim Einsatz als Teil einer Sonnenschutzvorrichtung kann das Flächengebilde im Bereich von transparenten Dachflächen oder auch im Bereich von Seiten-, Heck- oder Frontscheiben eines entsprechenden Fahrzeugs eingesetzt werden. Derartige Schutzvorrichtungen sind insbesondere bei Kraftfahrzeugen, aber auch bei gezogenen Fahrzeugen wie Anhängern oder Wohnwagen, bei Schienenfahrzeugen oder bei Luft- oder Wasserfahrzeugen einsetzbar.

Aus der DE 41 12 737 C1 ist eine Laderaumabdeckung für ein Kraftfahrzeug bekannt, bei der ein biegeschlaffes Flächengebilde in Form einer Abdeckplane durch Querstreben versteift ist. Die Querstreben sind in seitlichen, fahrzeugfesten Führungen gehalten, so dass die Querstreben eine fahrzeugseitige Stützfunktion für das Flächengebilde übernehmen.

Aufgabe der Erfindung ist es, ein Flächengebilde der eingangs genannten Art zu schaffen, das ohne fahrzeugseitige Führungsfunktion über seine Fläche eine ausreichende Eigensteifigkeit in wenigstens einer Erstreckungsrichtung aufweist.

Diese Aufgabe wird dadurch gelöst, dass das Flächengebilde wenigstens abschnittsweise mit quer zu der Längserstreckungsrichtung erstreckten Versteifungssträngen versehen ist, die in die Web- oder Maschenware eingebracht sind. Die Dicke der Versteifungsstränge ist so bemessen, dass diese eine ebene Oberfläche des Flächengebildes in aufgespanntem Zustand zumindest nicht wesentlich beeinträchtigen, insbesondere auswölben. Durch die erfindungsgemäße Lösung wird das Flächengebilde wenigstens bereichsweise versteift, wobei vorzugsweise die Versteifungsstränge bereits bei der Herstellung des Flächengebildes in die Web- oder Maschenware eingearbeitet werden. Es ist auch möglich, die Versteifungsstränge bereits bei der Herstellung der Web- oder Maschenware mit einzuarbeiten.

In Ausgestaltung der Erfindung ragen die Versteifungsstränge nicht über einen Randbereich des Flächengebildes hinaus. Die Versteifungsstränge tragen damit nur aufgrund ihrer eigenen Steifigkeit und aufgrund der Einbindung in das Flächengebilde zur Versteifung des Flächengebildes bei. Sind sind vollständig innerhalb einer Grundfläche des Flächengebildes angeordnet.

In weiterer Ausgestaltung der Erfindung hat das Flächengebilde eine polygonale oder geometrisch undefinierte Grundfläche. Die Grundfläche ist somit weitgehend beliebig gestaltet und an den jeweiligen Einsatzzweck angepasst.

In weiterer Ausgestaltung der Erfindung erstreckt sich das Auszugprofil lediglich über einen Teilbereich einer Quererstreckung des Flächengebildes. In weiterer Ausgestaltung der Erfindung sind die Versteifungsstränge im Bereich von seitlich über das Auszugprofil hinausragenden Abschnitten des Flächengebildes angeordnet. Die Versteifungsstränge dienen dazu, die Bereiche, die zu den Verbindungsbereichen des Flächengebildes mit dem Auszugprofil beabstandet sind, zu versteifen. Denn das formstabile Auszugprofil trägt über die Breite, über die das Flächengebilde mit dem Auszugprofil durchgängig verbunden ist, maßgeblich zur Steifigkeit des Flächengebildes bei. Die darüber hinaus ragenden Seitenbereiche des Flächengebildes hingegen würden ohne die Versteifungsstränge schlaff herabhängen.

In weiterer Ausgestaltung der Erfindung sind die Versteifungsstränge als synthetische Filamente, insbesondere als Mono- oder Multifilamente aus PA, PE, PP, PVDF oder ähnlichen Kunststoffmaterialien, ausgeführt. Der Einsatz der synthetischen Filamente als Versteifungsstränge ermöglicht eine kostengünstige, wirtschaftliche Herstellung auch in großen Mengen. Je nach Einsatzzweck sind die Eigenschaften der synthetischen Filamente exakt auf die jeweilige Anwendung abstimmbar. So ist es möglich, die Filamente so zu gestalten, dass Licht- oder Temperatureinflüsse die gewünschten Eigenschaften nicht ändern. Die Filamente können auch wasser- oder feuchtigkeitsabweisend sein. Dies sind lediglich einige wenige Beispiele einer Vielzahl von Möglichkeiten in der Gestaltung der Eigenschaften der Filamente für die Einbindung in ein entsprechendes Flächengebilde.

In weiterer Ausgestaltung der Erfindung weist jeder Versteifungsstrang eine Dicke im Bereich zwischen 0,1 mm und 5 mm auf. Vorzugsweise ist die Dicke jedes Versteifungsstranges auf die Dicke entsprechender Fäden der Web- oder Maschenware derart abgestimmt, dass die Web-oder Maschenware durch die Einbindung der Filamente nicht beeinträchtigt oder beschädigt wird.

In weiterer Ausgestaltung der Erfindung bilden die Filamente die Schussfäden einer Webware. Die Filamente werden damit bereits bei der Herstellung der Webware mit eingearbeitet. Sie sind Teil der Webware.

In weiterer Ausgestaltung der Erfindung sind die Filamente durch Schlingen oder Schlaufen einer Maschenware hindurch erstreckt. Hierdurch wird eine geeignete Einbindung und Einarbeitung der Filamente in die Maschenware erreicht.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt eine Ausführungsform eines erfindungsgemäßen Flächengebildes für eine Laderaumabdeckung in einem Kraftfahrzeug und
- Fig. 2: in vergrößerter Detaildarstellung einen Ausschnitt des Flächengebildes nach Fig. 1.

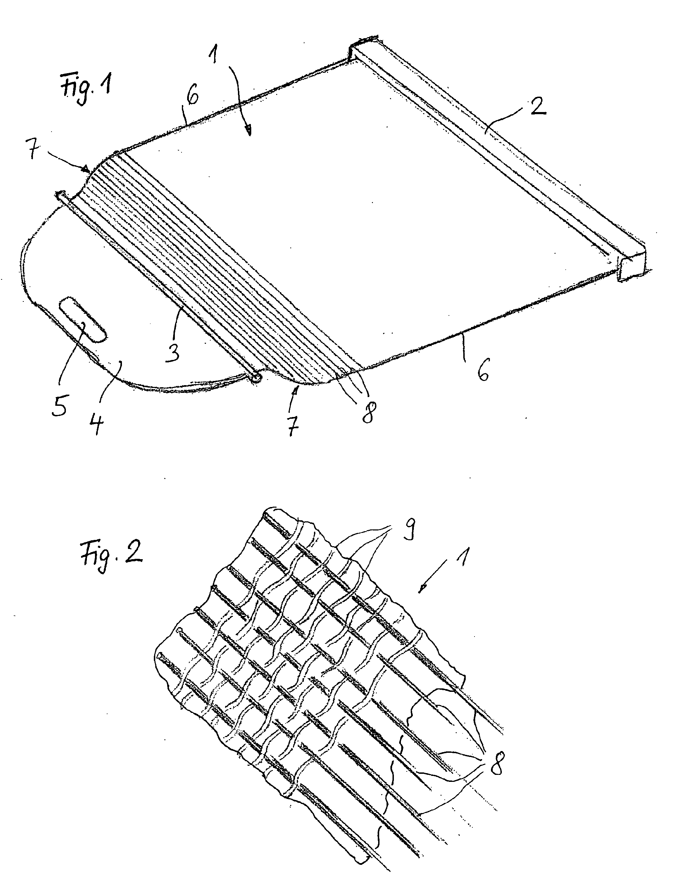

Ein Flächengebilde 1 nach den Fig. 1 und 2 ist Teil einer Laderaumabdeckung für einen Laderaum eines Kraftfahrzeugs, insbesondere einen Personenkraftwagens. Das Flächengebilde 1 ist aus einem Gewebe hergestellt, das auf einer nicht dargestellten Wickelwelle auf- und abwickelbar befestigt ist. Die Wickelwelle ist in einem Kassettengehäuse 2 drehbar gelagert. Das Kassettengehäuse 2 ist dazu vorgesehen, fahrzeugfest in einem Fahrzeuginnnenraum des Kraftfahrzeugs montiert zu werden. Das Kassettengehäuse 2 weist im Bereich einer Längsseite einen Längsschlitz auf, durch den das Flächengebilde 1 herausragt und in eine Schutzposition ausgezogen werden kann. Eine entsprechend ausgezogene Schutzposition ist in Fig. 1 erkennbar. Ein in Auszugrichtung hinterer Stirnendbereich des Flächengebildes 1 ist über seine gesamte Breite fest mit der nicht dargestellten Wickelwelle verbunden, insbesondere mit dieser verklebt oder auf andere Art und Weise form- oder stoffschlüssig mit der Wickelwelle verbunden. An einem in Auszugrichtung vorderen Stirnendbereich ist das Flächengebilde 1 fest mit einem Auszugprofil 3 verbunden, das formstabil ausgeführt ist. Dem Auszugprofil 3 ist ein ebenfalls formstabiles Konturteil 4 zugeordnet, in dem eine Griffaussparung 5 für das manuelle Ergreifen und Bewegen des Flächengebildes 1 vorgesehen ist. Das Auszugprofil 3 ist in grundsätzlich bekannter Weise an seinen gegenüberliegenden Stirnseiten mit Einhängezapfen versehen, die in karosserieseitige Halteaufnahmen, vorzugsweise in einem Heckbereich des Kraftfahrzeugs, einhängbar sind. Das Flächengebilde 1 ist vorzugsweise über seine Breite durchgängig mit dem Auszugprofil 3 verbunden. Es ist insbesondere um das Auszugprofil mit seinem Stirnendbereich herumgeschlungen und vernäht oder verklebt.

Gegenüberliegende Seitenrandbereiche 6 des Flächengebildes 1 erstrecken sich in der ausgezogenen Schutzposition gemäß Fig. 1 zunächst etwa parallel zueinander in Auszugrichtung, bevor sie in den Bereichen 7 eine Krümmung zur Mitte des Flächengebildes 1 nach innen vollführen. Diese sich ändernde Randkontur des Flächengebildes 1 ist bedingt durch eine entsprechende Laderaumkontur, bei der das Auszugprofil 3 im Bereich von Hecksäulen einer Karosserie des Kraftfahrzeuges eingehängt wird, die einen geringeren Abstand in Fahrzeugquerrichtung zueinander aufweisen als ein Abstand entsprechender Seitenwandungen des Laderaumes, die in Fahrzeuglängsrichtung nach vorne anschließen. Durch die der Laderaumkontur nachgeführte Randkontur des Flächengebildes 1 bilden die Bereiche 7 ohrenartige Abschnitte, die keine Stützung durch das kleinere Auszugprofil 3 erfahren. Um insbesondere in diesen Bereichen 7 wie auch über die gesamte übrige Längserstreckung des Flächengebildes 1 eine ausreichende Quersteifigkeit des Flächengebildes 1 zu erzielen, ist das Flächengebilde 1 mit Querstreben in Form von synthetischen Filamenten 8 versehen, die in das entsprechende Gewebe des Flächengebildes 1 eingearbeitet sind. Die Filamente 8 sind beim dargestellten Ausführungsbeispiel als Monofilamente eines geeigneten Kunststoffs wie PA, PE, PP, PVDF oder ähnlichem ausgeführt. Die Monofilamente 8 ragen bis zur Randkontur des Flächengebildes 1 quer zur Auszugrichtung durch das Flächengebilde 1 hindurch und schließen demzufolge mit den Seitenrandbereichen 6 bzw. den Randkonturen der Bereiche 7 nach außen ab. Die Monofilamente 8 sind bereits bei der Herstellung des Gewebes als Schussfäden in das Gewebe eingearbeitet. Die in Auszugrichtung verlaufenden Fäden sind Kettfäden 9, die anhand der Fig. 2 erkennbar sind. Diese weisen gegenüber den Monofilamenten 8 eine wesentlich reduzierte Steifigkeit auf, so dass das Flächengebilde 1 problemlos auf die Wickelwelle aufgewickelt werden kann. Die Monofilamente 8 erstrecken sich parallel zu einer Drehachse der Wickelwelle, so dass diese beim Aufwickeln des Flächengebildes 1 auf die Wickelwelle keinen Biegewiderstand bilden. Die Monofilamente 8 sind derart steif ausgeführt, dass das Flächengebilde 1 in Querrichtung, d.h. quer zur Auszugrichtung, zumindest weitgehend eigensteif ausgeführt ist. Vorzugsweise liegt die Dicke der Monofilamente 8 in einem Bereich zwischen 0,5 mm und 5 mm. Beim dargestellten Ausführungsbeispiel sind die Monofilamente 8, wie anhand der Fig. 2 erkennbar ist, lediglich maximal um den Faktor 2 dicker als die quer dazu verlaufenden Kettfäden 9. Wie anhand der Fig. 2 erkennbar ist, wird jeder Schussfaden des Gewebes des Flächengebildes 1 durch ein Monofilament 8 gebildet. Bei einer nicht dargestellten Ausführungsform wird nicht jeder Schussfaden des Gewebes durch ein Monofilament gebildet, das zur Versteifung dient. Vielmehr werden bei dieser Ausführungsform die Monofilamente lediglich vereinzelt in größeren Abständen zueinander als Schussfäden in das Gewebe eingebracht.

## Patentansprüche

1. Flächengebilde für eine Schutzvorrichtung in einem Fahrzeuginnenraum, das zumindest in einer Längserstreckungsrichtung weitgehend biegeschlaff gestaltet ist, mit einem formstabilen Auszugprofil, das an einem Stirnendbereich des Flächengebildes angeordnet ist, wobei das Flächengebilde aus einer textilen Web-oder Maschenware hergestellt ist, **dadurch gekennzeichnet, dass** das Flächengebilde (1) wenigstens abschnittsweise mit quer zu der Längserstreckungsrichtung erstreckten Versteifungssträngen (8) versehen ist, die in die Web- oder Maschenware eingebracht sind.

2. Flächengebilde nach Anspruch, **dadurch gekennzeichnet, dass** die Versteifungsstränge (8) nicht über einen Randbereich (6, 7) des Flächengebildes (1) hinausragen.

3. Flächengebilde nach Anspruch 1 oder 2, **dadurch gekennzeichnet, dass** das Flächengebilde eine polygonale oder geometrisch undefinierte Grundfläche hat.

4. Flächengebilde nach Anspruch 1, **dadurch gekennzeichnet, dass** das Auszugprofil (3) sich lediglich über einen Teilbereich einer Quererstreckung des Flächengebildes (1) erstreckt.

5. Flächengebilde nach Anspruch 3, **dadurch gekennzeichnet, dass** die Versteifungsstränge (8) im Bereich von seitlich über das Auszugprofil (3) hinausragenden Abschnitten (7) des Flächengebildes angeordnet sind.

6. Flächengebilde nach Anspruch 1, **dadurch gekennzeichnet, dass** die Versteifungsstränge (8) als synthetische Filamente, insbesondere als Mono- oder Multifilamente aus PA, PE, PP, PVDF oder ähnlichen Kunststoffen, ausgeführt sind.

7. Flächengebilde nach Anspruch 6, **dadurch gekennzeichnet, dass** jeder Versteifungsstrang (8) eine Dicke im Bereich zwischen 0,1 mm und 5 mm aufweist.

8. Flächengebilde nach Anspruch 6, **dadurch gekennzeichnet, dass** die Filamente (8) die Schussfäden einer Webware bilden.

9. Flächengebilde nach Anspruch 6, **dadurch gekennzeichnet, dass** die Filamente (8) durch Schlingen oder Schlaufen einer Maschenware hindurch erstreckt sind.

10. Schutzvorrichtung für einen Fahrzeuginnenraum mit einem zwischen einer kompakt abgelegten Ruheposition und einer zumindest teilweise ausgezogenen Schutzposition beweglich gelagerten, zumindest weitgehend biegeschlaffen Flächengebilde, das nach einem der vorhergehenden Ansprüche ausgeführt ist.
